Europäisches Patentamt

European Patent Office

Office européen des brevets

(11) Numéro de publication: **0 138 690 B1**

# (12) FASCICULE DE BREVET EUROPEEN

(45) Date de publication de fascicule du brevet: **03.03.93**  (51) Int. Cl.⁵: **A23C  9/152**

(21) Numéro de dépôt: **84401957.0**

(22) Date de dépôt: **01.10.84**

Le dossier contient des informations techniques présentées postérieurement au dépôt de la demande et ne figurant pas dans le présent fascicule.

(54) **Lait et produits laitiers appauvris ou non en calcium et enrichis en magnésium.**

(30) Priorité: **03.10.83 FR 8315731**

(43) Date de publication de la demande:
**24.04.85 Bulletin  85/17**

(45) Mention de la délivrance du brevet:
**03.03.93 Bulletin  93/09**

(84) Etats contractants désignés:
**AT BE CH DE FR GB IT LI LU NL SE**

(56) Documents cités:
**CH-A- 301 778**
**DE-A- 2 621 215**
**FR-A- 2 452 879**
**GB-A- 2 015 863**
**US-A- 3 192 124**

**J.L. RASIC et al.: "Yoghurt", vol. 1, 1978, pages 347,348, by the authors, Switzerland, CH**

**CHEMICAL ABSTRACTS, vol. 91, no. 17, 1979, page 549, résumé no. 139502n, Columbus, Ohio, US; M. VOYER et al.: "Nitrogen retention: its risks and relation to magnesium, potassium, and phosphorus retention in pre-**

**mature babies fed with a regimen based on human milk", & ANN. PEDIATR. 1979, 26(6), 373-379**

**JOURNAL OF DAIRY SCIENCE, vol. 59, no. 10, 1976, pages 1699-1710; G. MURTHY et al.: "Reactivation of alkaline phosphatase in ul-tra high-temperature, short-time processed liquid milk products"**

(73) Titulaire: **Société anonyme: LES LABORATOI-RES MERAM**
**4 Bld Malesherbes**
**F-75008 Paris(FR)**

(72) Inventeur: **Pechery, Claude**
**Avenue de la Libération**
**F-77020 Melun Cédex(FR)**

(74) Mandataire: **Gillard, Marie-Louise et al**
**Cabinet Beau de Loménie 55, Rue d'Amster-dam**
**F-75008 Paris (FR)**

## Description

Les pays développés de l'Hémisphère Nord, notamment l'Europe, ont connu un changement très important de leurs habitudes alimentaires au lendemain de la deuxième guerre mondiale.

Après les privations des années 1940-1947 est apparu un véritable engouement réactionnel à l'égard des aliments riches et des aliments très raffinés (type farine blanche, sucre blanc, sel blanc) au détriment du son, d'une farine d'un taux de blutage moins élevé, du sucre non raffiné, du sel marin, de toutes denrées renfermant des éléments minéraux utiles, voire indispensables, comme le magnésium.

Une seconde cause de carence d'apport en magnésium provient de ce que les aliments riches en magnésium sont presque toujours bannis de nos repas en raison de leur pouvoir calorique élevé. Cependant, le magnésium est l'un des éléments vitaux les plus importants. Il active plus de 300 enzymes et intervient dans la régulation de la perméabilité cellulaire et l'excitabilité neuromusculaire (J. Clin. Chem. Clin. Biochem. vol. 18, 1980 p. 257-270).

On assiste alors à la naissance d'une pathologie fonctionnelle très inconfortable dont le cadre nosologique est précisé à partir des années 1959-1969 et est désigné sous le nom de déficit magnésique (D.M.).

L'étiologie de cette affection est alimentaire et touche également l'animal et l'homme. Une confirmation est apportée par les vétérinaires qui, aux USA, en Angleterre et en France, décrivent la tétanie d'herbage (grass tetany). La supplémentation de la ration en magnésium fait disparaître les crises tétaniques des bovins.

Chez l'homme, la magnésothérapie pratiquée depuis 15 ans avec le succès qu'on lui connaît, consacre également le bien-fondé de l'hypothèse d'une carence alimentaire en magnésium. A cet effet, on peut citer les études de D. AMIOT et al. Journal de Médecine de Besançon, 5è année n° 5 sept-Oct 1969 et de Y. RAYSSIGUIER et al. Ann. Biol. anim. Bioch. Biophys. 1974, 14 (1) 145-156 .

A côté des thérapeutiques existantes, le but de l'invention est de proposer une supplémentation de la ration alimentaire de la population. Il existe déjà des produits alimentaires enrichis en magnésium. De tels produits sont notamment commercialisés sous forme de biscuits, galettes, pains ou produits laitiers enrichis en magnésium :

Des yaourts ont été préparés à partir de lait additionné de protéines, de graisse, de magnésium et d'acide orotique (J.L. RASIC et al. : "Yoghurt", Vol. 1, 1978, pages 347 - 348, Dr. J. RASIC & J. A. KURMANN Eds., Switzerland). On a également déjà décrit des compléments diététiques pour lait maigre comprenant un ensemble de nutriments allant des minéraux aux vitamines, de telle sorte que la teneur en calories de l'ensemble ne dépasse pas 200 Kcal (Brevet DE N° 2 621 215).

On a également proposé de préparer des produits alimentaires pour la consommation orale par optimisation de leur composition en cations, tel que le rapport molaire Ca/Mg soit compris entre 10:1 et 1:100 de préférence entre 2:1 et 1:1 (Brevet GB N° 2 015 863).

La Demanderesse a trouvé que l'on peut utiliser le lait et ses dérivés comme vecteur de magnésium. En effet, peu de sujets échappent à l'ingestion de produits laitiers sous une forme crue ou élaborée (laits ou yaourts); les yaourts sont dans le peloton de tête des aliments lactés. En outre, ces deux produits sont susceptibles d'une conservation allant de 3 semaines (yaourts) à plusieurs mois (lait longue conservation). Ces deux raisons à elles seules justifieraient amplement ce choix de l'alimentation. Il existe au moins un argument supplémentaire en faveur de ce choix : les travaux bibliographiques antérieurs rapportent que certains sucres, et notamment le lactose, favorisent l'assimilation du magnésium. On rappelera que dans le lait, le rapport Ca/Mg est environ égal à 10. En effet, un litre de lait de vache renferme environ 1,30 g de calcium et 0,13 g de magnésium.

L'invention a donc pour objet un lait enrichi en magnésium, ledit lait étant appauvri ou non en calcium. L'invention concerne également les produits laitiers obtenus à partir du lait selon l'invention, notamment des yaourts.

Le lait enrichi en magnésium selon l'invention peut être obtenu aussi bien à partir de lait entier cru, que de lait demi-écrémé et de lait pasteurisé, par exemple par la technique UHT, par addition d'une quantité appropriée de magnésium.

La quantité de magnésium à ajouter doit répondre aux critères diététiques et être telle qu'elle ne perturbe pas la stabilité du lait. Pour satisfaire cette dernière condition, on a trouvé qu'il avait lieu d'ajouter à du lait décalcifié ou non une quantité d'un sel de magnésium pouvant apporter jusqu'à 1 g/l de $Mg^{++}$, de telle sorte que le rapport Ca/Mg soit compris entre 1, et 0,6, ledit sel de magnésium étant choisi parmi le lactate, le chlorure ou le pyrrolidone carboxylate de magnésium.

Le lait selon l'invention peut aussi être enrichi en lactose ou en un autre sucre (par exemple mannose) pour permettre une assimilation accrue du magnésium.

Selon une variante préférée de l'invention, le lait enrichi en magnésium est un lait préalablement appauvri en calcium par élimination de 25 à 50 % de la teneur initiale en calcium, et enrichi avec du magnésium jusqu'à une teneur en $Mg^{++}$ pouvant atteindre 1g/l.

Le lait selon l'invention est obtenu par addition d'un sel de magnésium après éventuellement décalcification effectuée par exemple par passage sur résine échangeuse d'ions ou brassage avec une telle résine. Le magnésium peut être ajouté sous la forme d'un sel ou d'un complexe hydrosoluble, voire liposoluble, par exemple sous la forme de chlorure de magnésium.

On sait que, pour déminéraliser le lait, on peut le traiter par certaines résines échangeuses d'ions (A.M. GUYOT-HERMANN, "Technologie des laits industriels"; Labo-Pharma, n° 261 janvier 1977, p. 25). Il existerait même sur le marché étranger un lait contenant moins de 60 milligrammes de calcium par litre (A.M. GUYOT-HERMANN "Le lait maternel et les laits modifiés" Soc. Pharma. de Lille,n° 2, 1970, p. 95).

Pour décalcifier le lait selon l'invention, on a utilisé une résine échangeuse d'ions de type sulfonique, marque AMBERLITE IR-20, commercialisée par Rohm and Haas Company, sous sa forme sodique. Cette opération de décalcification peut être effectuée :
- soit par passage sur colonne de résine,
  . à débit constant ou
  . à débit variable
- soit par brassage de la résine avec le lait.

Le lait ou les produits lactés peuvent en outre contenir des éléments nutritifs classiques, tel que des éléments minéraux et des vitamines, de préférence la vitamine $B_6$, à raison de 10 à 40 mg/l.

La présente invention va être maintenant décrite plus en détail par les exemples illustratifs ci-après.

Exemple 1 : décalcification du lait par passage à débit constant sur une colonne contenant de la résine

On a utilisé une colonne de résine "AMBERLITE IR 120" et du lait entier pasteurisé. La hauteur du lit de résine était de 80 cm et le détassage était effectué par soulèvement à 50 % de la résine à l'aide d'eau sous pression, à contre-courant.

On a fait passer 2 l de lait sur la colonne en 45 minutes, soit un débit de 2,5 l/h. Le diamètre de la colonne était de 3 cm et le volume du lit de résine de 565 ml. Le débit équivalent était donc de 5 l/h/l de résine.

Les 120 premiers ml ont été rejetés et les prélèvements ont été faits toutes les 3 minutes 30 secondes, le prélèvement de chaque échantillon de 14 ml durant 20 secondes. Les dosages du calcium dans les échantillons ont été effectués par spectrophotométrie d'absorption atomique, 24 heures après les prélèvements, ceux-ci étant conservés à la température ambiante. Pour le témoin, la teneur en calcium était de 1,320 g/l. Les résultats des dosages du calcium dans les prélèvements successifs étaient les suivants :

TABLEAU I

| Numéro du prélèvement | Teneur en calcium de l'éluat en mg/l | Pourcentage de calcium retenu par la résine |
|---|---|---|
| 1 | 80 | 93,94 |
| 2 | 82 | 93,78 |
| 3 | 91 | 93,10 |
| 4 | 98 | 92,57 |
| 5 | 101 | 92,34 |
| 6 | 106 | 91,77 |
| 7 | 113 | 91,44 |
| 8 | 123 | 90,68 |
| 9 | 138 | 89,54 |
| 10 | 151 | 88,56 |
| 11 | 154 | 88,33 |
| 12 | 172 | 86,97 |
| 13 | 176 | 86,66 |
| 14 | 194 | 85,30 |

Le pourcentage de calcium retenu décroît très nettement mais sans uniformité. Chaque prélèvement conservé à température ambiante ne présente aucune séparation de phases.

Exemple 2

On a répété l'expérience de l'exemple 1, en utilisant la même résine et la même colonne, mais en passant une quantité plus importante de lait ( 4 litres en 1 heure 50 minutes),soit un débit de 2,20 l/h. Le volume de la résine étant le même que précédemment, soit 565 ml,le débit équivalent était donc de 4,40 l/h/l de résine.

Les 100 premiers millilitres ont été rejetés et les prélèvements ont été faits ensuite tous les 500 millilitres. On a dosé le calcium dans ces prélèvements dans les mêmes conditions que dans l'exemple précédent. Les résultats sont donnés dans le tableau ci-dessous, la teneur en calcium du lait utilisé étant à l'origine de 1,243 g/l.

TABLEAU II

| Numéro du prélèvement | Teneur en calcium de l'éluat en mg/l | Pourcentage de calcium retenu par la résine |
|---|---|---|
| 1 | 255 | 79,48 |
| 2 | 505 | 59,37 |
| 3 | 560 | 54,94 |
| 4 | 600 | 51,73 |
| 5 | 640 | 48,51 |
| 6 | 690 | 44,48 |
| 7 | 710 | 42,80 |
| 8 | 715 | 42,47 |

Le pourcentage de calcium retenu par la résine décroît encore avec le temps et il est en moyenne, pour l'ensemble des prélèvements voisin de 50 %.

Exemple 3 : décalcification du lait par passage à débit variable sur une colonne contenant de la résine

On a utilisé la même résine et la même colonne que dans les exemples 1 et 2.
On a fait passer 1 litre de lait entier pasteurisé en 1 heure. Le débit était :
- pour les échantillons 1 à 6 de 2 litres/heure
- pour les échantillons 7 à 8 de 1,33 litres/heure.
Les prélèvements ónt été faits tous les 200 ml et les dosages effectués comme précédemment.
Les résultats sont les suivants, la teneur en calcium du lait témoin étant de 1,350g/l;

TABLEAU III

| Numéro du prélèvement | Teneur en calcium de l'éluat en mg/l | Pourcentage de calcium retenu par la résine |
|---|---|---|
| 1 | 228 | 83,11 |
| 2 | 294 | 78,22 |
| 3 | 304 | 77,48 |
| 4 | 320 | 76,29 |
| 5 | 340 | 74,81 |
| 6 | 358 | 73,48 |
| 7 | 338 | 74,96 |
| 8 | 332 | 75,40 |

D'après ces résultats, on voit que le débit a une influence importante sur le pourcentage de calcium retenu.

Le témoin et les différents prélèvements ont été laissés à la température ambiante pendant 48 heures. Alors que le témoin présentait, au bout de ce temps, du caillé en surface avec une assez forte odeur, les prélèvements ne présentaient, à l'oeil nu, aucun changement.

Exemple 4 : décalcification du lait par brassage avec la résine

On peut également éliminer une partie du calcium du lait en brassant celui-ci avec une résine échangeuse d'ions du même type que celle utilisée dans les exemples précédents.

On a brassé un litre de lait avec 200 ml de résine dans un bécher à l'aide d'un agitateur magnétique. L'expérience a duré 4 heures 1/2 et les prélèvements ont été, dans un premier temps, effectués toutes les demi-heures et filtrés sur papier filtre.

Les résultats sont les suivants, la teneur primitive en calcium du lait étant de 1,350g/l

TABLEAU IV

|  | Calcium en mg/l dans le lait | pourcentage de calcium retenu par la résine |
|---|---|---|
| Après 1/2 h de brassage | 368 | 72,74 |
| Après 1 h de brassage | 328 | 75,70 |
| Après 1 h 1/2 de brassage | 315 | 76,66 |
| Après 2 h de brassage | 295 | 78,14 |
| et après 4 h 1/2 | 284 | 78,96 |

Dans ce cas, le "débit équivalent" au bout de 30 minutes était de 5l/h/litre de résine. Ce mode de décalcification est préféré aux fins de l'invention du fait de sa rapidité.

On a répété la même expérience que ci-dessus avec des temps de brassage beaucoup plus courts (3 à 15 minutes) et on a obtenu un pourcentage de calcium dans le lait de l'ordre de 50 %.

On a répété la même expérience que ci-dessus en brassant cependant seulement 100 millilitres de résine (au lieu de 200 ml comme ci-dessus) dans un bécher à l'aide d'un agitateur magnétique.

Le dosage en calcium du lait après brassage avec la résine a été fait par spectrophotométrie d'absorption atomique $\lambda$ = 422,7 nm.

Les résultats obtenus en fonction du temps de brassage sont indiqués dans le tableau V ci-après, la teneur en calcium du témoin étant de 1,210 g/l.

TABLEAU V

|  | Calcium en mg | Pourcentage de calcium | |
|---|---|---|---|
|  |  | retenu par la résine | restant dans le lait |
| Après 3 min de brassage | 858 | 29,1 | 70,9 |
| " 6 min " " | 737 | 39,1 | 60,9 |
| " 9 min " " | 671 | 44,5 | 55,5 |
| " 15 min " " | 649 | 46,4 | 53,6 |
| " 20 min " " | 539 | 55,4 | 44,6 |
| " 30 min " " | 506 | 58,2 | 41,8 |
| " 40 min " " | 473 | 60,9 | 39,1 |
| " 50 min " " | 462 | 61,8 | 38,2 |
| " 60 min " " | 429 | 64,5 | 35,5 |

Les exemples ci-dessus montrent que l'utilisation de résine échangeuse d'ions permet d'éliminer jusqu'à 90 % du calcium du lait, notamment en faisant passer le lait sur colonne remplie avec une telle résine.

On notera que pour atteindre la décalcification préférée selon l'invention (40 à 50 %), il suffit donc de choisir le volume de la résine et le débit de passage sur la colonne pour obtenir un lait dont 40 à 50 % seulement du calcium ont été éliminés.

Exemple 5 : préparation du lait selon l'invention

La seconde phase du procédé de préparation du lait selon l'invention consiste à ajouter au lait une quantité connue de magnésium.

On a répété une opération de décalcification du lait selon les exemples 1 et 2 et on a ajouté à chaque prélèvement de lait sortant de la colonne une quantité de 1 g/l de $Mg^{++}$ sous forme de chlorure, soit 4 g/l de chlorure de magnésium.

Sur une colonne d'un diamètre de 4 cm, remplie avec la même résine que dans l'exemple 1, le volume du lit de résine étant de 1 litre, on a fait passer 5,5 litres de lait pasteurisé en 1 heure. Le débit équivalent était donc de 5,5 l/h/l de résine.

Les 250 premiers millilitres ont été rejetés et des prélèvements A à I de 112,5 millilitres ont été faits tous les 500 millilitres.

Chaque prélèvement A à I a été réparci en cinq flacons de 22,5 ml.
- Le premier flacon est le témoin qui a servi au dosage du calcium.
- Le deuxième flacon a été conservé à température ambiante.
- Le troisième flacon a été conservé au réfrigérateur.
- Le quatrième flacon, auquel ont été ajoutés 4 g/l de $MgCl_2$, a été conservé à température ambiante.
- Le cinquième flacon, auquel ont été ajoutés 4g/l de $MgCl_2$, a été conservé au réfrigérateur.

Le dosage du calcium a été effectué, dans les divers prélèvements, de la même façon que dans l'exemple 1.

Les résultats étaient les suivants, la teneur en calcium du témoin étant de 1,24 g/l.

TABLEAU VI

| prélèvement | Teneur en calcium de l'éluat en mg/l | Pourcentage de calcium retenu par la résine |
|---|---|---|
| A | 67 | 94,59 |
| B | 73 | 94,11 |
| C | 79 | 93,63 |
| D | 84 | 93,22 |
| E | 100 | 91,93 |
| F | 123 | 90,03 |
| G | 152 | 87,74 |
| H | 192 | 84,51 |
| I | 218 | 82,92 |

Les divers prélèvements ont également été observés à l'oeil nu.
- Après 24 heures de repos à température ambiante :
  . Les flacons sans $MgCl_2$ des prélèvements A à E présentaient deux phases très nettes, de même que ceux des prélèvements F à I.
  . Les flacons avec $MgCl_2$ des prélèvements A à E ne présentaient aucune séparation de phases; ceux des prélèvements F à I seulement une très légère séparation en deux phases.
- Après 24 heures de repos au réfrigérateur :
  . Les flacons sans $MgCl_2$ des prélèvements A à E présentaient deux phases nettes, ceux des prélèvements F à I deux phases très nettes.
  . Les flacons avec $MgCl_2$ de tous les prélèvements présentaient deux phases faiblement visibles.

Après 72 heures de repos, tous les flacons, conservés à température ambiante ou au réfrigérateur, contenant ou non du $MgCl_2$, présentaient une séparation en deux phases très nettes.

Cet exemple montre que le lait décalcifié supplémenté en magnésium est plus stable que le lait décalcifié non supplémenté et peut être conservé 24 heures pratiquement sans séparation de phases.

Le lait selon l'invention peut servir à la fabrication de yaourts, comme le montre l'exemple ci-après.

Exemple 6 : yaourts fabriqués avec du lait décalcifié et supplémenté en magnésium, selon l'invention

Deux litres de lait "longue conservation, stérilisé U.H.T." ont été passés sur résine dans les mêmes conditions que dans l'exemple 2. On a obtenu du lait dont 46 % environ de calcium qu'il contenait étaient éliminés. On a fabriqué une série de yaourts avec ce lait décalcifié, sans adjonction de $MgCl_2$, et une autre

série de yaourts après adjonction à ce lait de quantités variables de $MgCl_2$. Pour ces différentes fabrications, on a utilisé du ferment constitué par de la poudre de lait contenant du saccharose, du lactose et du Strep. thermophilus L.B. Bulgaricus (ferment bleu vendu par Yalacta) à raison de 4 g de ferment par titre de lait.

L'échantillon témoin, sans adjonction de $MgCl_2$, a permis l'obtention de yaourts stables, et présentant une bonne conservation. Il en était de même des échantillons auxquels on a ajouté 2 g/l et 4 g/l de $MgCl_2$. Mais pour une supplémentation en $MgCl_2$ supérieure à 4 g/l les yaourts obtenus présentaient une rapide sédimentation.

On peut donc fabriquer des yaourts avec le lait selon l'invention décalcifié et supplémenté avec un maximum de 4 g/l de $MgCl_2$.

Exemple 7 : effet d'une supplémentation par voie orale obtenue avec les produits lactés selon l'invention lors d'un déficit magnésique

a) Protocole d'essais

Une expérimentation sur rats a permis d'apprécier l'effet d'une administration par voie orale d'une préparation lactée, enrichie en magnésium, selon l'invention, lors d'un déficit magnésique.

Des rats mâles de souche Wistar ont été répartis au hasard en 3 groupes. L'un de ces groupes a reçu ad libitum un régime purifié ayant une teneur normale (1 g/kg M.S.) en magnésium et les deux autres groupes un régime carencé en magnésium (0,050 g/kg M.S.) pendant 16 jours.

A partir du 13e jour, on a supplémenté en magnésium le régime de l'un des groupes carencés en administrant aux rats deux fois par jour, pendant 4 jours, 5 ml de produit lacté selon l'invention (lait décalcifié à environ 50 % additionné de 4 g/l de $MgCl_2$) par sonde stomacale. On a réalisé une prise de sang à chaque animal des 3 groupes le 13e jour de l'expérimentation (début de la période de supplémentation) et le 16e jour (fin de la période d'expérimentation). On a abattu les animaux environ 3 heures après le dernier sondage stomacal, le sang étant recueilli par ponction cardiaque sous anesthésie à l'éther. On a dosé le magnésium dans le plasma et les globules rouges par spectrophotométrie d'absorption. (Perkin Elmer 420)

b) Résultats

Les résultats sont donnés dans le tableau suivant :

### Taux de Mg dans le plasma

(moyenne pour chaque groupe d'animaux)

|  | témoins | Carencés (1) | Carencés (2) |
|---|---|---|---|
| Prélèvements le 13e jour | $19,15\pm0,27$ | $3,56\pm0,48$ | $4,50\pm0,22$ |
|  |  |  | Carencés supplémentés |
| Prélèvements le 16e jour | $17,55\pm0,29$ | $4,31\pm0,19$ | $15,42\pm0,42$ |

### Taux de Mg dans les globules rouges

(moyenne pour chaque groupe)

|  | | | |
|---|---|---|---|
| Prélèvements le 13e jour | $59,27\pm1,38$ | $35,82\pm1,88$ | $35,02\pm2,27$ |
|  |  |  | Carencés supplémentés |
| Prélèvements le 16e jour | $61,60\pm0,93$ | $38,39\pm1,83$ | $56,76\pm1,65$ |

On peut commenter les résultats de la façon suivante :

Les signes classiques du déficit magnésique se sont manifestés le 13e jour de carence de façon identique dans les deux lots carencés : diminution de la croissance, hyperhémie des oreilles, diminution significative des taux de magnésium sérique et globulaire par rapport au lot témoin.

La poursuite de la carence dans le lot non supplémenté n'a pas modifié les paramètres précédents.

La supplémentation d'un lot carencé par la préparation lactée selon l'invention a entraîné une augmentation hautement significative des valeurs du Mg plasmatique et globulaire par rapport au lot carencé. Ces valeurs très proches de la normalité sont cependant significativement plus faibles que celles des témoins. L'hyperhémie des oreilles a disparu.

En conclusion, la préparation selon l'invention permet après 4 jours d'administration de corriger presque entièrement un déficit magnésique expérimental sévère.

Exemple 8 : effet d'une supplémentation par voie orale obtenue avec des yaourts selon l'invention ayant différentes teneurs en magnésium

On a répété le protocole d'essais décrit à l'exemple 7 à l'aide de préparations lactées supplémentées en magnésium selon l'invention, dans les conditions ci-après.

On a utilisé 5 lots de rats répartis comme suit :
. le premier lot (lot A) a servi de lot témoin, cependant que les 4 autres ont été carencés par un régime approprié.
. le deuxième lot (lot B) a été le lot témoin carencé et a été continuellement alimenté avec le même régime jusqu'à J 16 environ.
. le troisième lot (lot C) a été, à partir de J 13, supplémenté avec une préparation lactée renfermant 400 mg de cation $Mg^{++}$ par litre.
. le quatrième lot (lot D) a été, à partir de J (3, supplémenté avec une préparation lactée renfermant 700 mg de cation $Mg^{++}$ par litre.
. le cinquième lot (lot E) a été, à partir de J 13, supplémenté avec une préparation lactée renfermant 400 mg de cation $Mg^{++}$ plus 10 mg de vitamine B6 par litre.

Les préparations lactées utilisées dans les essais ci-dessus étaient des yaourts préparés à partir d'un lait décalcifié à 25 % environ et ayant les caractéristiques suivantes :

Lot C : yaourts de 90 ml renfermant 400 mg de $Mg^{++}$ par litre ;
Lot D : yaourts de 90 ml renfermant 700 mg de $Mg^{++}$ par litre ;
Lot E : yaourts de 90 ml renfermant 400 mg de $Mg^{++}$ plus 10 mg de vitamine B6 par litre.

Résultats

Les signes classiques du déficit magnésique se sont manifestés le 13e jour de carence de façon identique dans les deux lots carencés : légère diminution de la croissance, hyperhémie des oreilles, diminution significative de la magnésémie et du magnésium globulaire par rapport au lot témoin.

La poursuite de la carence dans le lot non supplémenté n'a pas modifié les paramètres précédents.

La supplémentation par des différentes préparations lactées a entraîné une augmentation hautement significative des valeurs du Mg plasmatique et globulaire par rapport au lot carencé. Ces valeurs sont cependant plus faibles que celles des témoins. L'hyperhémie des oreilles a disparu.

Les différents types de supplémentation ont eu des effets différents sur la magnésémie.

La magnésémie du groupe D est significativement plus élevée que celle des groupes C et E.

La magnésémie du groupe E est significativement plus élevée que celle du groupe C.

Les différentes préparations lactées selon l'invention permettent de corriger rapidement un déficit magnésique expérimental.

On a indiqué dans les tableaux VII, VIII et IX ci-après la teneur en magnésium plasmatique et globulaire et la teneur en calcium lors des premiers et seconds prélèvements de sang (à J 13 et J 16). Le nombre d'animaux utilisés par lot est indiqué entre parenthèses dans chaque tableau.

## T A B L E A U   V I I

### Mg PLASMA (mg/1)

lers prélèvements

| | Témoins A | Carencés B | Lot C | Lot D | Lot E |
|---|---|---|---|---|---|
| | 19,2 | 6,0 | 2,9 | 3,5 | 5,2 |
| | 19,1 | 5,9 | 4,7 | 5,9 | 3,6 |
| | 18,5 | 3,0 | 3,1 | 2,9 | 7,1 |
| | 20,5 | 4,0 | 3,7 | 4,1 | 4,4 |
| | 22,7 | 3,8 | 5,5 | 3,5 | 5,1 |
| | 21,0 | 4,4 | 3,6 | 3,8 | 3,1 |
| | 17,2 | 3,5 | 5,4 | 2,9 | 3,5 |
| | 20,5 | 3,0 | 5,0 | 3,4 | 5,4 |
| | 21,0 | | | | |
| | 22,4 | | | | |
| Moyenne ± S.E.M. | 20,21 ± 0,54 | 4,2 ± 0,42 | 4,24 ± 0,37 | 3,75 ± 0,34 | 4,67 ± 0,46 |
| | (10) | (8) | (8) | (8) | (8) |

2èmes prélèvements

| | A | B | C | D | E |
|---|---|---|---|---|---|
| | 17,2 | 4,6 | 15,2 | 15,4 | 13,7 |
| | 18,2 | 3,2 | 13,8 | 15,2 | 13,3 |
| | 16,9 | 4,6 | 12,8 | 14,1 | 15,6 |
| | 18,5 | 4,0 | 12,9 | 16,9 | 13,8 |
| | 16,4 | 4,6 | 12,3 | 14,5 | 14,0 |
| | 17,9 | 4,8 | 12,2 | 14,7 | 13,6 |
| | 21,1 | 4,1 | 12,2 | 16,2 | 12,5 |
| | 20,0 | 4,6 | 11,1 | 14,7 | 15,7 |
| | 21,4 | | | | |
| | 17,3 | | | | |
| Moyenne ± S.E.M. | 18,49 ± 0,56 | 4,31 ± 0,19 | 12,81 ± 0,44 | 15,21 ± 0,33 | 14,02 ± 0,39 |
| | (10) | (8) | (8) | (8) | (8) |

EP 0 138 690 B1

EP 0 138 690 B1

## TABLEAU VIII

### CALCIUM (mg/1)

lers prélèvements

| | Témoins A | Carencés B | Lot C | Lot D | Lot E |
|---|---|---|---|---|---|
| | 111 | 112 | 116 | 117 | 118 |
| | 110 | 108 | 114 | 123 | 116 |
| | 108 | 105 | 110 | 122 | 115 |
| | 110 | 117 | 108 | 115 | 115 |
| | 96 | 115 | 112 | 116 | 122 |
| | 114 | 109 | 114 | 112 | 118 |
| | 111 | 106 | 117 | 117 | 115 |
| | 103 | 114 | 109 | 114 | 111 |
| | 108 | | | | |
| | 103 | | | | |
| Moyenne ± S.E.M. | 107,4 ± 1,67 | 110,75 ± 1,55 | 112,5 ± 1,16 | 117 ± 1,34 | 116,25± 1,13 |
| | (10) | (8) | (8) | (8) | (8) |

2èmes prélèvements

| | A | B | C | D | E |
|---|---|---|---|---|---|
| | 106 | 116 | 106 | 112 | 113 |
| | 110 | 117 | 112 | 109 | 113 |
| | 105 | 109 | 122 | 107 | 107 |
| | 103 | 122 | 115 | 109 | 111 |
| | 104 | 111 | 105 | 106 | 113 |
| | 110 | 118 | 108 | 107 | 114 |
| | 105 | 105 | 107 | 115 | 110 |
| | 113 | 108 | 104 | 110 | 114 |
| | 107 | | | | |
| | 109 | | | | |
| Moyenne ± S.E.M. | 107,2 ± 1,01 | 113,25 ± 2,07 | 109,87 ± 2,17 | 109,37 ± 1,05 | 111,87 ± 0,85 |
| | (10) | (8) | (8) | (8) | (8) |

## TABLEAU IX

### GLOBULES ROUGES (mg/1)

**1ers prélèvements**

| | Témoins A | Carencés B | Lot C | Lot D | Lot E |
|---|---|---|---|---|---|
| | 63,9 | 44 | 42 | 39 | 58 |
| | 75,0 | 52 | 54 | 34 | 50 |
| | 71,0 | 60 | 53 | 50 | 60 |
| | 64,4 | 46 | 46 | 48 | 52 |
| | 77,0 | 53 | 61 | 61 | 42 |
| | 87,0 | 54 | 57 | 42 | 51 |
| | 66,0 | 48 | 49 | 44 | 48 |
| | 62,0 | 52 | 52 | 44 | 56 |
| | 82,0 | | | | |
| | 66,0 | | | | |
| Moyenne ± S.E.M. | 71,43 ± 2,69 (10) | 51,12 ± 1,78 (8) | 51,75 ± 2,14 (8) | 45,25 ± 2,86 (8) | 52,12 ± 2,06 (8) |

**2èmes prélèvements**

| | A | B | C | D | E |
|---|---|---|---|---|---|
| | 71 | 49 | 64 | 57 | 64 |
| | 66 | 55 | 63 | 58 | 59 |
| | 64 | 50 | 55 | 63 | 57 |
| | 71 | 46 | 53 | 54 | 63 |
| | 66 | 44 | 57 | 57 | 56 |
| | 68 | 51 | 61 | 62 | 66 |
| | 73 | 51 | 62 | 52 | 64 |
| | 65 | 57 | 59 | 60 | 58 |
| | 57 | | | | |
| | 69 | | | | |
| Moyenne ± S.E.M. | 67 ± 1,44 (10) | 50,37 ± 1,51 (8) | 59,25 ± 1,40 (8) | 57,87 ± 1,33 (8) | 60,87 ± 1,34 (8) |

**Exemple 9 : incidence du taux de calcium sur la recharge magnésique d'animaux carencés à l'aide des produits lactés selon l'invention**

On a répété le protocole d'essais de l'exemple 7 en utilisant des rats Wistar mâles d'un poids initial de 200 g distribués au hasard en 5 groupes (T-O-F-G-H). Ces rats ont reçu ad libitum un régime purifié ayant une teneur normale (lot T) ou carencée en magnésium (O, F, G, H) (l g ou 0,050 g/kg M.S.) pendant 16 jours.

A partir du 13e jour de période expérimentale, la supplémentation en Mg des lots carencés a été réalisée par administration deux fois par jour pendant 4 jours de 5 ml des produits lactés par sondage stomacal (lots F, G, H). Une prise de sang a été réalisée le 13e jour avant le début de la supplémentation sur 8 témoins et 8 carencés en magnésium et le 16e jour à la fin de la période de supplémentation sur l'ensemble des lots.

L'abattage des animaux est intervenu 3 h environ après le dernier sondage, le sang était recueilli par ponction cardiaque sous anesthésie à l'éther.

Le magnésium et le calcium plasmatiques et le magnésium globulaire ont été dosés par spectrométrie d'absorption (Perkin Elmer 420). Les résultats obtenus figurent dans les tableaux ci-après X à XIV. Le nombre de rats utilisés dans chaque lot est indiqué entre parenthèses dans les différents tableaux.

Les produits lactés utilisés dans les essais ci-dessus étaient des yaourts qui présentaient les caractéristiques ci-après :

Lot F :    yaourts de 90 ml fabriqués à partir de lait non décalcifié contenant 1 000 mg de $Mg^{++}$ par litre ;

Lot G :    yaourts de 90 ml fabriqués à partir de lait décalcifié d'environ 25 % et contenant 1 000 mg par litre de $Mg^{++}$ ;

Lot H :    yaourts de 90 ml fabriqués à partir de lait décalcifié d'environ 50 % et contenant 1 000 mg par litre de $Mg^{++}$.

Comme dans les essais ci-dessus, les signes classiques du déficit magnésique se sont manifestés le 13e jour de carence de façon identique dans les deux lots carencés : légère diminution de la croissance, hyperhémie des oreilles, diminution significative de la magnésémie et du magnésium globulaire par rapport au lot témoin, hypercalcémie.

La supplémentation par les différentes préparations lactées (F, G, H) a entraîné une reprise de croissance chez les carencés, une augmentation hautement significative de valeurs du Mg plasmatique et globulaire.

Les différents types de supplémentation n'ont pas eu d'effets différents sur la magnésémie mais le magnésium globulaire du lot H est significativement plus élevé que celui du lot F (6,36 ± 0,07 vs 6,07 ± 0,09 ; t = 2,28 ; P <0,05).

En conclusion, les différentes préparations étudiées permettent de corriger rapidement un déficit magnésique expérimental. S'il n'a pas été possible de mettre en évidence de différence d'effet des différentes préparations sur le magnésium plasmatique, la préparation H est significativement plus efficace que la préparation F pour relever le magnésium globulaire.

TABLEAU X

CROISSANCE DES RATS

|  | TEMOINS | CARENCES = O | F | G | H |
|---|---|---|---|---|---|
| POIDS INITIAL | 204 ± 3<br>(8) | 201 ± 1<br>(8) | | | |
| POIDS FINAL | 264 ± 5<br>(8) | 236 ± 4<br>(10) | 263 ± 5<br>(10) | 264 ± 6<br>(9) | 256 ± 6<br>(8) |

EP 0 138 690 B1

T A B L E A U   X I

VALEURS DU MAGNESIUM ET DU CALCIUM AVANT SUPPLEMENTATION
(mg/100 ml)

| TEMOINS | | | CARENCES | | |
|---|---|---|---|---|---|
| $Mg_p$ | $Ca_p$ | $Mg_e$ | $Mg_p$ | $Ca_p$ | $Mg_e$ |
| 2,10 | 8,8 | 6,96 | 0,54 | 10,2 | 5,12 |
| 2,01 | 8,7 | 7,04 | 0,58 | 10,6 | 4,52 |
| 2,14 | 9,0 | 7,12 | 0,53 | 10,7 | 4,36 |
| 2,01 | 8,8 | 6,60 | 0,47 | 10,1 | 4,68 |
| 1,95 | 9,7 | 7,00 | 0,51 | 10,4 | 3,84 |
| 2,17 | 9,5 | 6,32 | 0,40 | 10,3 | 4,96 |
| 1,67 | 9,6 | 6,40 | 0,47 | 9,7 | 4,44 |
| 2,06 | 9,5 | 6,40 | 0,64 | 10,1 | 4,24 |
| 2,01 ± 0,05 | 9,2 ± 0,14 | 6,73 ± 0,11 | 0,52 ± 0,02 | 10,26 ± 0,10 | 4,52 ± 0,13 |
| (8) | (8) | (8) | (8) | (8) | (8) |

14

EP 0 138 690 B1

TABLEAU XII

MAGNESIUM PLASMATIQUE $(mq/100 \ ml)$

LOTS

| T | 0 | F | G | H |
|---|---|---|---|---|
| 1,71 | 0,46 | 1,51 | 1,60 | 1,60 |
| 1,73 | 0,53 | 1,74 | 1,58 | 1,35 |
| 1,60 | 0,19 | 1,70 | 1,82 | 1,61 |
| 1,82 | 0,39 | 1,65 | 1,69 | 1,57 |
| 1,62 | 0,55 | 1,37 | 1,79 | 1,27 |
| 1,63 | 0,51 | 1,59 | 1,43 | 1,39 |
| 1,71 | 0,33 | 1,31 | 1,71 | 1,59 |
| 1,70 | 0,38 | 1,53 | 1,52 | 1,71 |
| 1,76 | 0,31 | 1,52 | 1,61 | |
| 1,79 | 0,33 | 1,58 | | |
| $1,71 \pm 0,03$ | $0,40 \pm 0,03$ | $1,53 \pm 0,04$ | $1,64 \pm 0,04$ | $1,51 \pm 0,05$ |
| (10) | (10) | (10) | (9) | (8) |

TABLEAU XIII

MAGNESIUM ERYTHROCYTAIRE *(mg/100 ml)*

| T | O | F | G | H |
|---|---|---|---|---|
| 6,44 | 4,69 | 6,07 | 6,07 | 6,26 |
| 6,53 | 5,06 | 6,16 | 5,98 | 6,72 |
| 6,35 | 3,40 | 5,43 | 6,16 | 6,53 |
| 6,81 | 4,05 | 6,07 | 6,44 | 5,98 |
| 6,44 | 4,23 | 6,07 | 6,62 | 6,35 |
| 6,62 | 4,88 | 5,89 | 6,44 | 6,35 |
| 6,44 | 4,23 | 6,07 | 6,07 | 6,53 |
| 6,62 | 4,23 | 6,35 | 6,44 | 6,35 |
| 6,81 | 3,96 | 6,62 | 6,16 | |
| 7,08 | 3,59 | 5,98 | | |
| | | | | |
| 6,61 ± 0,07 | 4,23 ± 0,18 | 6,07 ± 0,09 | 6,26 ± 0,07 | 6,36 ± 0,07 |
| *(10)* | *(10)* | *(10)* | *( 9)* | *( 8)* |

**TABLEAU XIV**

CALCIUM PLASMATIQUE (mg/100 ml)

| T | O | F | G | H |
|---|---|---|---|---|
| 10,4 | 10,2 | 9,6 | 9,5 | 10,0 |
| 9,6 | 9,9 | 9,5 | 9,4 | 9,6 |
| 9,6 | 10,1 | 9,4 | 9,4 | 9,6 |
| 10,2 | 10,4 | 9,6 | 9,7 | 9,9 |
| 9,2 | 10,1 | 10,0 | 9,7 | 10,2 |
| 9,6 | 10,3 | 9,4 | 9,2 | 9,9 |
| 8,8 | 9,8 | 9,6 | 9,4 | 9,8 |
| 10,8 | 10,2 | 9,4 | 9,7 | 9,6 |
| 9,7 | 9,9 | 9,7 | 9,4 | |
| 10,8 | 10,0 | 9,1 | | |
| $9,87 \pm 0,20$ (10) | $10,09 \pm 0,06$ (10) | $9,53 \pm 0,07$ (10) | $9,49 \pm 0,05$ (9) | $9,82 \pm 0,07$ (8) |

## Revendications

1. Lait enrichi en magnésium, caractérisé en ce qu'il est obtenu par adjonction à du lait décalcifié ou non d'une quantité d'un sel de magnésium pouvant apporter jusqu'à 1 g/l de $Mg^{++}$, en ce que le rapport Ca/Mg est de 1 à 0,6, ledit sel de magnésium étant choisi parmi le lactate, le chlorure ou le pyrrolidone carboxylate de magnésium.

2. Lait selon la revendication 1, caractérisé en ce que le lait est du lait entier cru, du lait demi-écrémé ou du lait paspteurisé.

3. Lait selon l'une des revendications 1 ou 2 caractérisé en ce que le lait est un lait décalcifié.

4. Lait selon l'une quelconque des revendications 1 à 3, caractérisé en ce que le lait est décalcifié par élimination de 25 à 50 % de calcium contenu primitivement dans le lait, par passage de celui-ci sur une résine échangeuse d'ions et addition ultérieure de magnésium en une quantité allant jusqu'à 1 g/l de $Mg^{++}$.

5. Produits laitiers caractérisés en ce qu'ils sont préparés à partir du lait selon l'une quelconque des revendications 1 à 4.

6.  Yaourts caractérisés en ce qu'ils sont préparés à partir du lait selon l'une quelconque des revendications 1 à 4.

## Claims

1.  Magnesium-enriched milk, characterized in that it is obtained by the addition, to milk depleted or not depleted in calcium, of a quantity of a magnesium salt capable of providing up to 1 g/liter of $Mg^{++}$, in that the Ca/Mg ratio is 1 to 0.6, said magnesium salt being selected from the magnesium lactate, chloride or pyrrolidonecarboxylate.

2.  Milk according to claim 1, characterized in that the milk is raw whole milk, semi-skimmed milk or pasteurized milk.

3.  Milk according to one of claims 1 or 2, characterized in that the milk is a calcium-depleted milk.

4.  Milk according to any one of claims 1 to 3, characterized in that the milk is depleted in calcium by the removal of 25 to 50% of the calcium initially contained in the milk, by passage of the latter over an ion exchange resin and the subsequent addition of magnesium in a quantity ranging up to 1 g/liter of $Mg^{++}$.

5.  Milk products characterized in that they are prepared from the milk according to any one of claims 1 to 4.

6.  Yogurts characterized in that they are prepared from the milk according to any one of claims 1 to 4.

## Patentansprüche

1.  Mit Magnesium angereicherte Milch, dadurch gekennzeichnet, dass sie durch Zusatz, zu an Kalzium verarmter oder nicht verarmter Milch, einer Magnesiumsalzmenge erhalten wird, die bis zu 1 g/l an $Mg^{++}$ ergeben kann, dadurch dass das Ca/Mg-Verhältnis 1 zu 0,6 beträgt, wobei das genannte Magnesiumsalz unter Magnesium-Lactat, Magnesium-Chlorid oder Magnesium-Carboxylat-Pyrrolidon ausgewählt wird.

2.  Milch nach Anspruch 1, dadurch gekennzeichnet, dass die Milch rohe Vollmilch, fettarme Milch oder pasteurisierte Milch ist.

3.  Milch nach einem der Ansprüche 1 oder 2, dadurch gekennzeichnet, dass die Milch an Kalzium verarmte Milch ist.

4.  Milch nach einem der Ansprüche 1 bis 3, dadurch gekennzeichnet, dass die Milch durch Ausscheiden von 25% bis 50% des ursprünglich in der Milch enthaltenen Kalziums verarmt wird, durch Führung der Milch über ein Ionenaustauscherharz und späteren Zusatz von Magnesium in einer Menge bis zu 1 g/l $Mg^{++}$.

5.  Milchprodukte, dadurch gekennzeichnet, dass sie aus Milch nach einem der Ansprüche 1 bis 4 hergestellt werden.

6.  Joghurts, dadurch gekennzeichnet, dass sie aus Milch nach einem der Ansprüche 1 bis 4 hergestellt werden.